(19) Europäisches Patentamt / European Patent Office / Office européen des brevets

(11) **EP 2 607 305 A1**

(12) **EUROPÄISCHE PATENTANMELDUNG**

(43) Veröffentlichungstag:
**26.06.2013 Patentblatt 2013/26**

(51) Int Cl.:
***C01B 25/455*** (2006.01)  ***C01D 15/00*** (2006.01)

(21) Anmeldenummer: **11195631.4**

(22) Anmeldetag: **23.12.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**51369 Leverkusen (DE)**

(72) Erfinder:
- **Boll, Matthias**
  **51061 Köln (DE)**
- **Eebenbeck, Wolfgang**
  **51373 Leverkusen (DE)**
- **Kuckert, Eberhard**
  **51375 Leverkusen (DE)**

(54) **LiPF6-Lösungen**

(57) Die vorliegende Erfindung betrifft korrosionsarme halogenidarme $LiPF_6$-Lösungen sowie deren Verwendung in elektrochemischen Speichervorrichtungen oder zur Herstellung derselben.

**EP 2 607 305 A1**

**Beschreibung**

Die vorliegende Erfindung betrifft $LiPF_6$-Lösungen sowie deren Verwendung in elektrochemischen Speichervorrichtungen oder zur Herstellung derselben.

Die Verbreitung von tragbaren elektronischen Geräten, wie z.B. Laptop und Palmtop-Computern, Mobiltelefonen oder Videokameras und damit auch der Bedarf nach leichten und leistungsfähigen Batterien hat in den letzten Jahren weltweit dramatisch zugenommen. Hinzu kommt in Zukunft die Ausrüstung von Elektrofahrzeugen mit derartigen Batterien.

Angesichts dieses sprunghaft gestiegenen Bedarfs nach Batterien und den damit verbundenen ökologischen Problemen kommt der Entwicklung von wiederaufladbaren Batterien mit einer langen Lebensdauer eine stetig wachsende Bedeutung zu.

Seit den frühen neunziger Jahren werden wiederaufladbare Lithiumionenbatterien, eigentlich: Lithiumionenakkumulatoren, kommerziell angeboten. Die meisten dieser Akkumulatoren arbeiten mit Lithiumhexafluorophosphat als Leitsalz. Dieses Lithiumsalz stellt jedoch eine extrem hydrolyseempfindliche Verbindung mit einer geringen thermischen Stabilität dar, so dass die entsprechenden Lithiumakkumulatoren aufgrund dieser Eigenschaften des Salzes nur durch sehr aufwändige und somit auch sehr kostenintensive Verfahren hergestellt werden können. Die entstehenden Hydrolyseprodukte des Lithiumhexafluorophosphats, wie etwa freies Fluorid, zeigen vor allem in Gegenwart von Wasser eine hohe Korrosivität gegenüber einigen im Akkumulator enthaltenen Bauteilen wie etwa der Anode und der Kathode.

Diese Empfindlichkeit gegen Wasser und die daraus entstehenden Zersetzungsprodukte mindern die Lebensdauer sowie die Leistung von Lithiumionenakkumulatoren und beeinträchtigen auch deren Einsatz unter extremen Bedingungen, wie z.B. hohen Temperaturen..

Stellt man $LiPF_6$ her, fällt dieses in heute gängigen großtechnischen Prozessen zwangsläufig zusammen mit Halogeniden, insbesondere Fluoriden an, die bzw. das sich störend im Hinblick auf die Effizienz und Lebensdauer einer elektrochemischen Speichervorrichtung auswirken können.

Daher werden in der Literatur verschiedene Lösungsvorschläge für die Verringerung des HF-Gehaltes, respektive Fluorid-Gehaltes in $LiPF_6$ angeboten:

In CN 102009972A wurden HF-Anteile aus einem $LiPF_6$-Kristallisat mittels eines Stickstoffstroms entfernt.

In JP 09-268 005 wurde reaktionsbedingt entstandenes HF durch Entgasen der erhaltenen $LIPF_6$ - Lösung unter Kühlung entfernt.

DE 198 05 356 C1 beschreibt die Herstellung von reinem $LiPF_6$ aus LiF und $PCl_5$ in Diethylether, bei dem eine Suspension von LiF in Diethylether angesäuert und anschließend mit $PCl_5$ umgesetzt wurde. Diese Mischung wurde nach erfolgter Umsetzung neutralisiert, filtriert und entweder zur Trockene eingedampft, oder $LiPF_6$ wird mit Hilfe eines Kristallisationshilfsmittels auskristallisiert.

Anfallendes $LiPF_6$-Etherat wurde dann in Methylcyclohexan gelöst und unter einem Druck von 800 mbar eingeengt. Man erhielt ein Kristallisat mit einem Chloridgehalt von 70 ppm. In weiteren Versuchen erzielte man Chlorid-Gehalte von < 20 ppm.

Nachteilig an dem oben zitierten Stand der Technik ist die Tatsache, dass entweder der Halogenid-Gehalt, insbesondere der Fluoridgehalt nicht niedrig genug war oder mit Chlorid sogar zusätzliche unerwünschte Halogenide prozessbedingt eingeführt wurden, was die Korrosivität von $LiPF_6$-Lösungen und damit zu befüllender elektrochemischer Speichervorrichtungen negativ beeinflusst.

Des Weiteren wurde in WO02/28500 A1 vorgeschlagen, die $LiPF_6$-haltige Lösung mit einem Alkalimetallhydrid zur Entfernung von Wasser und anderen protischen Verunreinigungen reagieren zu lassen. Das hierin vorgeschlagene NaH reagiert zwar sehr schnell, aber hat den großen Nachteil, dass hiermit Natriumionen in die Lösung gegeben werden, die den späteren Einsatz des $LiPF_6$-Lösung stören können. Durch eine Verunreinigung von $LiPF_6$-Lösungen mit weiteren Metallen können die elektrochemischen Prozesse in der Zelle einer elektrochemischen Speichervorrichtung, insbesondere durch Ausbildung von Solid Elektrolyte Interphase(s) (SEI), ungünstig beeinflusst werden, beziehungsweise unerwünschte Redoxprozesse einsetzen.

Die Aufgabe der vorliegenden Erfindung bestand daher in der Bereitstellung nicht-korrosiver $LiPF_6$-Lösungen in einem organischen Lösungsmittel zwecks Einsatz in elektrochemischen Speichervorrichtungen, ohne die Lösungen während der Neutralisation durch fremde Alkalimetalle, abgesehen des durch das Herstellungsverfahren zwangsläufig vorliegenden Lithiums, zu verunreinigen.

Die Lösung der Aufgabe und somit Gegenstand der vorliegenden Erfindung ist die Herstellung einer nicht-korrosiven / korrosionsarmen, $LiPF_6$-Lösung, erhältlich durch Behandlung einer nichtwässrigen, halogenidhaltigen $LiPF_6$-Lösung mit wenigstens einem Additiv der Reihe aus elementarem Lithium oder wenigstens einer seiner Verbindungen Lithiumcarbonat oder Butyllithium, wobei das $LiPF_6$ in wenigstens einem Lösungsmittel aus der Reihe der organischen Nitrile oder der organischen Carbonate oder Mischungen derselben gelöst ist und als Lithiumverbindung auch das Reaktionsprodukt aus Lithium und wasserfreiem Acetonitril gilt.

Überraschenderweise gelingt es LiPF$_6$-Lösungen in besagten Lösungsmitteln / Lösungsmittelgemischen mit einem Gesamtgehalt an Fluorid von weniger als 8000 ppm ("halogenidarm") bei gleichzeitigem Wassergehalt von weniger als 100 ppm ("wasserfrei") oder einem Gesamtgehalt an Fluorid von weniger als 20 ppm ("halogenidfrei") herzustellen. Die Korrosionswirkung von "halogenidarmer" und gleichzeitig "wasserfreier" oder "halogenidfreier" Lösung in einem Lithiumionenakkumulator ist auch über einen längeren Zeitraum hinweg vernachlässigbar. Eine Verunreinigung der Lösung mit fremden Alkalimetallionen oder Erdalkalimetallionen und dadurch bedingte, unerwünschte Redoxreaktionen sind ausgeschlossen.

Zur Klarstellung sei angemerkt, dass im Rahmen der vorliegenden Erfindung mit "Gesamtgehalt an Fluorid" der Gehalt gelöster Fluorid-Ionen als auch als LiF gebundenes Fluorid bezeichnet wird. Entsprechend bedeutet "halogenidarm" im Sinne der vorliegenden Erfindung, dass der Gehalt gelöster und/oder ungelöster Fluorid-Ionen in der LiPF$_6$-Lösung kleiner 8000 ppm ist. Entsprechend bedeutet "halogenidfrei" im Sinne der vorliegenden Erfindung, dass der Gehalt gelöster und/oder ungelöster Fluorid-Ionen in der LiPF$_6$-Lösung kleiner 20 ppm ist. Nicht-korrosiv im Sinne der vorliegenden Erfindung bedeutet, dass die Lösung entweder einen Wassergehalt von < 100ppm und gleichzeitig einen Gesamtfluoridgehalt von < 8000 ppm oder einen Gesamtfluoridgehalt von < 20 ppm bei einem gleichzeitigen Wassergehalt > 100 ppm aufweist. Dem Fachmann ist bekannt, dass die Kombination aus Wasser und Halogenid zu Korrosionserscheinungen an Metallen - in elektrochemischen Speichervorrichtungen vor allem an der Kathode und der Anode des Speichermoduls - führt. Darüberhinaus ist dem Fachmann bekannt, dass organische Lösungsmittel durch Inkontaktbringen mit $\gamma$-Al$_2$O$_3$, Lithium, Butyllithium der Wassergehalt minimiert wird, so dass auf weitere Messungen des Wassergehaltes verzichtet wurde. Ferner sei zur Klarstellung angemerkt, dass alle nachfolgend aufgeführten, allgemeinen oder in Vorzugsbereichen genannten Definitionen und Parameter in beliebigen Kombinationen umfasst sind.

Erfindungsgemäß als Lösungsmittel bevorzugt einzusetzendes organisches Nitril ist Acetonitril. Erfindungsgemäß als Lösungsmittel bevorzugt einzusetzende organische Carbonate sind Dimethylcarbonat oder Diethylcarbonat, besonders bevorzugt Dimethylcarbonat.

Die vorliegende Erfindung betrifft deshalb besonders bevorzugt korrosionsarme LiPF$_6$-Lösungen in Acetonitril, dadurch gekennzeichnet, dass zur Entfernung von Halogenid wenigstens ein Additiv der Reihe aus elementarem Lithium oder wenigstens einer seiner Verbindungen Lithiumcarbonat oder Butyllithium eingesetzt wird, wobei als Lithiumverbindung auch das Reaktionsprodukt aus Lithium und wasserfreiem Acetonitril gilt.

Die vorliegende Erfindung betrifft aber auch besonders bevorzugt korrosionsarme LiPF$_6$-Lösungen in Dimethylcarbonat, dadurch gekennzeichnet, dass zur Entfernung von Halogenid wenigstens ein Additiv der Reihe aus elementarem Lithium oder wenigstens einer seiner Verbindungen Lithiumcarbonat oder Butyllithium eingesetzt wird, wobei als Lithiumverbindung auch das Reaktionsprodukt aus Lithium und wasserfreiem Acetonitril gilt.

Als Butyllithium wird bevorzugt n-Butyllithium eingesetzt.

Wie oben beschrieben wird in einer bevorzugten Ausführungsform als Additiv das Reaktionsprodukt aus Lithium und wasserfreiem Acetonitril eingesetzt, das man erfindungsgemäß durch Eintrag von elementarem Lithium in Acetonitril erhält (siehe auch WO 03/080642 A1 oder Chem.Eur. J. 2002, 8, 2081 - 2087 oder Dissertation von W.Huettel, 8.2005, Rheinische Friedrich Wilhelms Universität Bonn, "Untersuchungen zur stereoselektiven, oxidativen Phenolkupplung von Cumarinen in Aspergillus Niger").

Die erfindungsgemäße Behandlung erfolgt in der Weise, dass zu einer Lösung von LiPF$_6$ in wenigstens einem der genannten Lösungsmittel das Additiv zugegeben wird und man das Additiv bevorzugt über einen Zeitraum von einer Minute bis 72 Stunden, besonders bevorzugt von einer Minute bis 30 Stunden bei einer Temperatur von bevorzugt 10 bis 80°C, besonders bevorzugt von 20 bis 40°C auf die Lösung einwirken lässt.. Dieser Verfahrensschritt wird auch als Neutralisation bezeichnet. Danach wird vorhandener ungelöster Feststoff abgetrennt und man erhält die korrosionsarme und halogenidarme Lösung von LiPF$_6$. Der erfindungsgemäß zweite Schritt ist die Feststoffabtrennung, die bevorzugt mittels Filtration, Sedimentation, Zentrifugation oder Flotation, besonders bevorzugt mittels Filtration, ganz besonders bevorzugt mittels Filtration über einen Filter mit einer mittleren Porenweite von 200 nm oder kleiner, durchgeführt wird.

Die vorliegende Erfindung betrifft daher auch ein Verfahren zur Herstellung von LiPF$_6$-Lösungen , dadurch gekennzeichnet, dass als Neutralistaionsschritt auf die Lösungen von LiPF$_6$ wenigstens ein Additiv der Reihe aus elementarem Lithium oder wenigstens einer seiner Verbindungen Lithiumcarbonat oder Butyllithium eingesetzt wird, wobei als Lithiumverbindung auch das Reaktionsprodukt aus Lithium und wasserfreiem Acetonitril gilt.und danach im zweiten Schritt die unlöslichen Komponenten, bevorzugt LiF, abfiltriert werden, wobei das LiPF$_6$ in wenigstens einem Lösungsmittel aus der Reihe der organischen Nitrile oder der organischen Carbonate gelöst ist.

Die vorliegende Erfindung betrifft bevorzugt ein Verfahren zur Herstellung von LiPF$_6$-Lösungen, besonders bevorzugt durch Entfernung von Halogeniden, ganz besonders bevorzugt durch Entfernung von Fluorid-Ionen, insbesondere bevorzugt durch Entfernung von Fluorid-Ionen die als HF-gebundenes Fluorid und/oder LiF-gebundenes Fluorid vorliegen, aus Lösungen von LiPF$_6$, dadurch gekennzeichnet, dass man in einem Neutralisationsschritt auf diese Lösungen von LiPF$_6$ wenigstens ein Additiv der Reihe aus elementarem Lithium oder wenigstens einer seiner Verbindungen Lithiumcarbonat oder Butyllithium einwirken lässt, wobei als Lithiumverbindung auch das Reaktionsprodukt aus Lithium und wasserfreiem Acetonitril gilt. und danach in einem zweiten Schritt die unlöslichen Komponenten abfiltriert, wobei das $LiPF_6$ in wenigstens einem Lösungsmittel aus der Reihe der organischen Nitrile oder der organischen Carbonate gelöst ist.

In einer bevorzugten Ausführungsform wird dem erfindungsgemäßen Verfahren ein Entgasungsverfahren nachgestellt. Bevorzugt zu entfernende Gase sind Wasserstoff oder $CO_c$ oder Alkane.

In einer bevorzugten Ausführungsform wird dem erfindungsgemäßen Verfahren ein Trocknungsschritt zur Entfernung von Wasser aus den einzusetzenden Lösungsmitteln vorausgeschickt. Beispielhafte Trockenschritte werden in der WO 02/28500 A1 beschrieben. Bevorzugte dem erfindungsgemäßen Verfahren vorauszuschickende Trocknungsverfahren sind

- das Mischen mit einem Lösungsmittel das niedrigsiedende Azeotrope mit Wasser bildet und die sich anschließende destillative Entfernung des Wassers/Lösungsmittelazeotrops gemäß JP 02087473,

- der Einsatz inerter fluorierter Flüssigkeiten, bevorzugt $C_8F_{18}$ als Schlepper gemäß WO 00/38813 A1,

- das Durchblasen von trockenen Inertgasen gemäß JP 103 38 653,

- das Absorbieren von Wasser an speziell vorbehandeltem Aluminiumoxid oder natürlichen oder synthetischen Aluminiumsilikaten gemäß JP 11 054 378, JP 11 008 163 oder gemäß DE 19 827 63 1,

- das Inkontaktbringen der $LiPF_6$-Lösung mit aminhaltigen polymerfixierten Reinigungsmitteln gemäß DE 19 827 630 oder

- das Trocknen mit Alkalimetallen unterschiedlich zu Li gemäß F.P.Dousek et. al. (Chem. Listy (1973), 67 (4) 427-32) oder JP 011 22 566.

In einer alternativ bevorzugten Ausführungsform wird der Trocknungsschritt dem erfindungsgemäßen Verfahren nachgestellt oder gleichzeitig mit dem erfindungsgemäßen Verfahren zur Abtrennung von Halogeniden angewandt.

Bevorzugt werden als natürliche oder synthetische Aluminiumsilikate Molekularsiebe eingesetzt.

Erfindungsgemäß zur Trocknung bevorzugt einzusetzende Molekularsiebe bestehen aus Zeolithen.

Zeolithe sind kristalline Aluminiumsilikate, die in zahlreichen Modifikationen in der Natur vorkommen, aber auch synthetisch hergestellt werden können. Mehr als 150 verschiedene Zeolithe sind synthetisiert worden, 48 natürlich vorkommende Zeolithe sind bekannt. Die natürlichen Zeolithe werden mineralogisch unter dem Begriff Zeolithgruppe zusammengefasst.

Die Zusammensetzung der Stoffgruppe Zeolithe ist:

$$M^{n+}_{x/n} [(AlO_2)^-_x (SiO_2)_y]\cdot z\, H_2O$$

- Der Faktor n ist die Ladung des Kations M und beträgt bevorzugt 1 oder 2.

- M ist bevorzugt ein Kation eines Alkali- oder Erdalkalimetalls. Diese Kationen werden zum elektrischen Ladungsausgleich der negativ geladenen Aluminium-Tertraeder benötigt und nicht in das Haupt-Gitter des Kristalls eingebaut, sondern halten sich in Hohlräumen des Gitters auf- und sind daher auch leicht innerhalb des Gitters beweglich und auch im Nachhinein austauschbar.

- Der Faktor z gibt an, wie viele Wassermoleküle vom Kristall aufgenommen wurden. Zeolithe können Wasser und andere niedermolekulare Stoffe aufnehmen und beim Erhitzen wieder abgeben, ohne dass ihre Kristallstruktur dabei zerstört wird.

- Das molare Verhältnis von $SiO_2$ zu $AlO_2$ bzw. y/x in der Summenformel wird als Modul bezeichnet. Es kann aufgrund der Löwenstein-Regel nicht kleiner als 1 werden.

Erfindungsgemäß bevorzugt als Molekülsieb einzusetzende synthetische Zeolithe sind:

| Zeolith | Zusammensetzung der Elementarzelle |
|---------|-----------------------------------|
| Zeolith A | $Na_{12}[(AlO_2)_{12}(SiO_2)_{12}]\cdot 27\ H_2O$ |
| Zeolith X | $Na_{86}[(AlO_2)_{86}(SiO_2)_{106}]\cdot 264\ H_2O$ |
| Zeolith Y | $Na_{56}[(AlO_2)_{86}(SiO_2)_{136}]\cdot 250\ H_2O$ |
| Zeolith L | $K_9[(AlO_2)_9(SiO_2)_{17}]\cdot 22\ H_2O$ |
| Mordenit | $Na_{8,7}[(AlO_2)_{86}(SiO_2)_{39,3}]\cdot 24\ H_2O$ |
| ZSM 5 | $Na_{0,3}H_{3,8}[AlO_2)_{4,1}(SiO_2)_{91,9}]$ |
| ZSM 11 | $Na_{0,1}H_{1,7}[AlO_2)_{1,8}(SiO_2)_{94,2}]$ |

Erfindungsgemäß bevorzugt schließt sich an das erfindungsgemäße Verfahren eine Feststoffabtrennung mit einem Filter, besonders bevorzugt eine Feststoffabtrennung über einen Spritzenfilter, ganz besonders bevorzugt mittels Filtration über einen Filter mit einer mittleren Porenweite von 200 nm oder kleiner, an, um das oder die Additive zur Abtrennung von Halogeniden und/oder Trocknung und/oder deren unlösliche Reaktionsprodukte aus der erfindungsgemäßen Lösung von $LiPF_6$ in wenigstens einem Lösungsmittel aus der Reihe der organischen Nitrile oder der organischen Carbonate zu entfernen, besonders bevorzugt zur Abtrennung von Lithiumfluorid.

Die erfindungsgemäßen $LiPF_6$-Lösungen in wenigstens einem Lösungsmittel aus der Reihe der organischen Nitrile oder der organischen Carbonate werden bevorzugt in elektrochemischen Speichervorrichtungen, bevorzugt in wiederaufladbaren Batterien oder Superkondensatoren eingesetzt.

Die vorliegende Erfindung betrifft deshalb auch die Verwendung der erfindungsgemäßen $LiPF_6$-Lösungen in wenigstens einem Lösungsmittel aus der Reihe der organischen Nitrile oder der organischen Carbonate in elektrochemischen Speichervorrichtungen bzw. elektrochemische Speichervorrichtungen enthaltend $LiPF_6$-Lösungen, die durch oben beschriebene Behandlung mit wenigstens einem Additiv von Halogenid, bevorzugt von Wasser und Halogenid, korrosionsarm wurden.

Die vorliegende Erfindung betrifft aber auch ein Verfahren zur Verbesserung der Langzeitstabilität oder Korrosionsstabilität elektrochemischer Speichervorrichtungen, bevorzugt der zu diesem Zweck einzusetzenden korrosionsarmen $LiPF_6$-Lösungen in wenigstens einem Lösungsmittel aus der Reihe der organischen Nitrile oder der organischen Carbonate, dadurch gekennzeichnet, dass man diese Lösungen einer Neutralisation und einer Feststoffabtrennung unterzieht, wobei die Neutralisation die Zugabe wenigstens eines Additivs der Reihe aus elementarem Lithium oder wenigstens einer seiner Verbindungen Lithiumcarbonat oder Butyllithium, wobei als Lithiumverbindung auch das Reaktionsprodukt aus Lithium und wasserfreien Acetonitril gilt, zu einer Lösung des $LiPF_6$ in wenigstens einem Lösungsmittel aus der Reihe der organischen Nitrile oder der organischen Carbonate bedeutet und eine anschließende Feststoffabtrennung erfolgt, um das Additiv und/oder sonstige als Feststoff vorliegende Substanzen, bevorzugt Lithiumfluorid zu entfernen.

## Beispiele

Im Folgenden sind unter der Angabe "%" immer Gew.-% zu verstehen.

Die beschriebenen Beispiele wurden, soweit nicht anders beschrieben, in einer Atmosphäre aus Argon mit einem Gehalt von < 0,1 ppm Wasser und < 0,1 ppm Sauerstoff durchgeführt.

Gemessen wurde die Konzentration des Hexafluorosphosphats und des Fluorids mit einem Ionenchromatograph mit folgenden Parametern:

Gerätetyp: Dionex ICS 2100

| | |
|---|---|
| Säule: | IonPac® AS20 2*250-mm "Analytical Column with guard" |
| Probenvolumen: | 1 μl |
| Eluent: | KOH Gradient: 0 min/15 mM, 10 min/15 mM, 13 min/80 mM, 27 min/100 mM, 27.1 min/15 mM, 34 min/15 mM |
| Eluent Fließrate: | 0,25 ml/min |
| Temperatur: | 30°C |
| Self-Regenerating Suppressor: | ASRS® 300 (2-mm) |

**Reduktion des freien Fluoridwertes durch Neutralisation:**

**Beispiel 1:**

Zu 10,26 g einer Lösung von 16,88 % LiPF$_6$ in über Molekularsieb getrocknetem Acetonitril mit einem freien Fluorid-Gehalt von 1,91 % wurden 43,9 mg Lithium Metall als kleine Kügelchen mit einem Durchmesser von ca. 1-2 mm zugegeben. Nach 15 Stunden wurde eine Probe der Lösung entnommen, über einen Spritzenfilter mit einer Porenweite von 200 nm filtriert und analysiert. Der Gehalt der Lösung an Fluorid betrug nur noch 0,73 %.

**Beispiel 2:**

Zu 11,01 g einer Lösung von 16,88 % LiPF$_6$ in über Molekularsieb getrocknetem Acetonitril mit einem freien Fluorid-Gehalt von 1,91 % wurden 5,06 g Aluminiumoxid (Fa. St-Bobain-Norpro, SA62XXX) sowie anschließend 226,6 mg Lithiumcarbonat zugegeben. Nach 15 Stunden wurde eine Probe der Lösung entnommen, über einen Spritzenfilter mit einer Porenweite von 200 nm filtriert und analysiert. Der Gehalt der Lösung an Fluorid betrug nur noch 0,32 %.

**Beispiel 3:**

Zu 12 ml einer Lösung von 16,88 % LiPF$_6$ in über Molekularsieb getrocknetem Acetonitril mit einem freien Fluorid-Gehalt von 1,91 % wurden 1 g CaO sowie 1 g Lithiumcarbonat zugegeben. Nach 30 Minuten wurde eine Probe der Lösung entnommen, über einen Spritzenfilter mit einer Porenweite von 200 nm filtriert und analysiert. Der Gehalt der Lösung an Fluorid lag an der Erfassungsgrenze im Bereich von 1 ppm.

**Beispiel 4:**

Zu 10 ml einer Lösung von 56,89 % LiPF$_6$ in über Molekularsieb getrocknetem Acetonitril mit einem freien Fluorid-Gehalt von 0,7 % wurde eine, bezogen auf den Fluoridgehalt, überstöchiometrische Menge an Li$_2$CO$_3$ gegeben. Die Lösung wurde nach kurzer Zeit über einen Spritzenfilter mit einer Porenweite von 200 nm filtriert und analysiert. Der Gehalt der Lösung an Fluorid betrug nur noch 0,1 Gew.-%.

**Beispiel 5:**

Zu 10,26 g einer Lösung von 34,27 % LiPF$_6$ in über Molekularsieb getrocknetem Dimethylcarbonat mit einem freien Fluorid-Gehalt von 0,97 % wurden 43,9 mg Lithium in Form von kleinen Kügelchen gegeben. Die Lösung wurde nach 15 h über einen Spritzenfilter mit einer Porenweite von 200 nm filtriert und analysiert. Der Gehalt der Lösung an Fluorid betrug nur noch 0,73 Gew.-%.

**Beispiel 6:**

Zu 11,02 g einer Lösung von 34,27 % LiPF$_6$ in über Molekularsieb getrocknetem Dimethylcarbonat mit einem freien Fluorid-Gehalt von 0,97 % wurden 5,06 g $\gamma$-Al$_2$O$_3$ und 226,6 mg Li$_2$CO$_3$ gegeben. Die Lösung wurde nach 15 h über einen Spritzenfilter mit einer Porenweite von 200 nm filtriert und analysiert. Der Gehalt der Lösung an Fluorid betrug nur noch 0,33 Gew.-%.

**Beispiel 7:**

Zu 5 g einer Lösung von 34,27 % LiPF$_6$ in über Molekularsieb getrocknetem Dimethylcarbonat mit einem freien Fluorid-Gehalt von 0,97 % wurden 1,3 ml einer 2 molaren Butyllithiumlösung in Pentan gegeben. Die Lösung wurde über einen Spritzenfilter mit einer Porenweite von 200 nm filtriert und analysiert. Der Gehalt der Lösung an Fluorid betrug nur noch 0,8 Gew.-%.

**Beispiel 8:**

Zu 5 g einer Lösung von 14,81 % LiPF$_6$ in über Molekularsieb getrocknetem Acetonitril mit einem freien Fluorid-Gehalt von 0,50 % wurden 0,8 ml einer 2 molaren Butyllithiumlösung in Pentan gegeben. Die Lösung wurde über einen Spritzenfilter mit einer Porenweite von 200 nm filtriert und analysiert. Der Gehalt der Lösung an Fluorid betrug nur noch 0,1 Gew.-%.

### Beispiel 9:

Herstellung einer Lösung aus Lithium und wasserfreien Acetonitril und Umsetzung derselben mit einer LiPF6-Lösung:

Es wurden 50 ml wasserfreies Acetonitril unter inerten Bedingungen vorgelegt und 52 mg Lithium zugegeben. Nach kurzer Zeit sprang die Reaktion unter Gasentwicklung an und das Lithium begann sich aufzulösen, wobei sich die Lösung gelblich verfärbte und sich gleichzeitig ein gelber Niederschlag bildete. In diese Suspension wurden 2,5 ml einer 16,35 %igen $LiPF_6$ in Acetonitril mit einem Gehalt an 3,75% Fluorid zugegeben. Die erhaltene Reaktionsmischung wurde über einen 200 nm Filter filtriert. Der Gehalt der Lösung an Fluorid lag unterhalb der Nachweisgrenze (< 2 ppm

### Beispiel 10:

Über eine mit 5 ml $Li_2CO_3$-Pulver *(oben)* und 10 ml getrocknetem und gemörsertem γ-$Al_2O_3$ *(unten)* gefüllten Säule wurden 10 ml einer 14,81 %igen $LiPF_6$-Lösung in Acetonitril mit einem freien Fluorid.-Gehalt von 0,50 % geleitet. Eine Probe des Eluats wurde über einen 200 nm Spritzenfilter filtriert und ionenchromatographisch analysiert. Der Gehalt der Lösung an Fluorid lag unterhalb der Nachweisgrenze von 2 ppm,

### Beispiel 11:

Zu 6,91 g einer Lösung von 14,81 % $LiPF_6$ in über Molekularsieb getrocknetem Acetonitril mit einem freien Fluorid-Gehalt von 0,50 % wurden 252,4 mg $Li_2CO_3$ gegeben und gerührt. Hierzu gab man 1,98 g gemörstertes γ-$Al_2O_3$ Die Lösung wurde nach 15 h über einen Spritzenfilter mit einer Porenweite von 200 nm filtriert und analysiert. Der Gehalt der Lösung an Fluorid lag unterhalb der Nachweisgrenze von 2 ppm.

### Beispiel 12:

Zu 6,79 g einer Lösung von 14,81 % $LiPF_6$ in über Molekularsieb getrocknetem Acetonitril mit einem freien Fluorid-Gehalt von 0,50 % wurden 201,7 mg $Li_2CO_3$ gegeben und gerührt. Anschließend wurden 203,9 mg CaO zugegeben. Die Lösung wurde nach 15 h über einen Spritzenfilter mit einer Porenweite von 200 nm filtriert und analysiert. Der Gehalt der Lösung an Fluorid betrug nur noch 20 ppm.

## Patentansprüche

1. $LiPF_6$-Lösungen erhältlich durch Behandlung einer nichtwässrigen, halogenidhaltigen $LiPF_6$-Lösung mit wenigstens einer Verbindung der Reihe aus elementarem Lithium oder wenigstens einer seiner Verbindungen Lithiumcarbonat oder Butyllithium, wobei als Lithiumverbindung auch das Reaktionsprodukt aus Lithium und wasserfreiem Acetonitril gemeint sein kann, wobei das $LiPF_6$ in wenigstens einem Lösungsmittel aus der Reihe der organischen Nitrile oder der organischen Carbonate gelöst ist und als Lithiumverbindung auch das Reaktionsprodukt aus Lithium und wasserfreiem Acetonitril gilt.

2. $LiPF_6$-Lösungen gemäß Anspruch 1, **dadurch gekennzeichnet, dass** als organisches Nitril Acetonitril eingesetzt wird.

3. $LiPF_6$-Lösungen gemäß Anspruch 1, **dadurch gekennzeichnet, dass** als organisches Carbonat Dimethylcarbonat oder Diethylcarbonat, bevorzugt Dimethylcarbonat eingesetzt wird.

4. $LiPF_6$-Lösungen gemäß Ansprüche 1 oder 2, **dadurch gekennzeichnet, dass** das $LiPF_6$ in Acetonitril vorliegt und zur Entfernung von Halogenid wenigstens ein Additiv der Reihe aus elementarem Lithium oder wenigstens einer seiner Verbindungen Lithiumcarbonat oder Butyllithium eingesetzt wird, wobei als Lithiumverbindung auch das Reaktionsprodukt aus Lithium und wasserfreiem Acetonitril gilt.

5. $LiPF_6$-Lösungen gemäß Ansprüche 1, 3 oder 4, **dadurch gekennzeichnet, dass** das $LiPF_6$ in Dimethylcarbonat oder Diethylcarbonat vorliegt und zur Entfernung von Halogenid wenigstens ein Additiv der Reihe aus elementarem Lithium oder wenigstens einer seiner Verbindungen Lithiumcarbonat oder Butyllithium eingesetzt wird, wobei als Lithiumverbindung auch das Reaktionsprodukt aus Lithium und wasserfreien Acetonitril gilt.

**6.** LiPF$_6$-Lösungen gemäß der Ansprüche 1 bis 5, **dadurch gekennzeichnet, dass** das oder die einzusetzende(n) Lösungsmittel zuvor getrocknet wurde(n).

**7.** LiPF$_6$-Lösungen gemäß Anspruch 6, **dadurch gekennzeichnet, dass** als Trocknungsverfahren, das Mischen mit einem Lösungsmittel das niedrigsiedende Azeotrope mit Wasser bildet und die sich anschließende destillative Entfernung des Wassers/Lösungsmittelazeotrops, der Einsatz inerter fluorierter Flüssigkeiten, bevorzugt C$_8$F$_{18}$ als Schlepper, das Durchblasen von trockenen Inertgasen, das Absorbieren von Wasser an speziell vorbehandeltem Aluminiumoxid oder natürlichen oder synthetischen Aluminiumsilikaten, das Inkontaktbringen der LiPF$_6$-Lösung mit aminhaltigen polymerfixierten Reinigungsmitteln oder das Trocknen mit Alkalimetallen unterschiedlich zu Li durchgeführt werden.

**8.** LiPF$_6$-Lösungen gemäß Anspruch 7, **dadurch gekennzeichnet, dass** als natürliche oder synthetische Aluminiumsilikate Molekularsiebe eingesetzt werden.

**9.** Verfahren zur Herstellung von LiPF$_6$-Lösungen, **dadurch gekennzeichnet, dass** man als Neutralistaionsschritt auf diese Lösungen von LiPF$_6$ wenigstens ein Additiv der Reihe aus elementarem Lithium oder wenigstens einer seiner Verbindungen Lithiumcarbonat oder Butyllithium einwirken läßt, wobei als Lithiumverbindung auch das Reaktionsprodukt aus Lithium und wasserfreien Acetonitril gilt, und danach in einem zweiten Schritt die unlöslichen Komponenten abfiltriert, wobei das LiPF$_6$ in wenigstens einem Lösungsmittel aus der Reihe der organischen Nitrile oder der organischen Carbonate gelöst ist..

**10.** Verfahren gemäß Anspruch 9, **dadurch gekennzeichnet, dass** dieses zur Entfernung von Halogeniden, bevorzugt von Fluorid-Ionen, eingesetzt wird.

**11.** Verfahren gemäß der Ansprüche 9 oder 10, **dadurch gekennzeichnet, dass** das oder die einzusetzende(n) Lösungsmittel zuvor getrocknet wurde(n) und als Trocknungsverfahren wenigstens eines der Reihe

- das Mischen mit einem Lösungsmittel das niedrigsiedende Azeotrope mit Wasser bildet und die sich anschließende destillative Entfernung des Wassers/Lösungsmittelazeotrops,
- der Einsatz inerter fluorierter Flüssigkeiten, bevorzugt C$_8$F$_{18}$ als Schlepper,
- das Durchblasen von trockenen Inertgasen,
- das Absorbieren von Wasser an speziell vorbehandeltem Aluminiumoxid oder natürlichen oder synthetischen Aluminiumsilikaten,
- das Inkontaktbringen der LiPF$_6$-Lösung mit aminhaltigen polymerfixierten Reinigungsmitteln oder
- das Trocknen mit Alkalimetallen unterschiedlich zu Li durchgeführt werden.

**12.** Verfahren gemäß der Ansprüche 9 oder 10, **dadurch gekennzeichnet, dass** ein Trocknungsschritt anschließend oder gleichzeitig durchgeführt wird.

**13.** Verfahren gemäß Anspruch 12, **dadurch gekennzeichnet, dass** als Trocknungsmittel natürliche oder synthetische Aluminiumsilikate oder Mg(ClO$_4$)$_2$ eingesetzt werden.

**14.** Verwendung von wenigstens einem Additiv der Reihe aus elementarem Lithium oder wenigstens einer seiner Verbindungen Lithiumcarbonat oder Butyllithium, wobei als Lithiumverbindung auch das Reaktionsprodukt aus Lithium und wasserfreien Acetonitril gilt, zur Herstellung von LiPF$_6$-Lösungen wobei das LiPF$_6$ in wenigstens einem Lösungsmittel der Reihe der organischen Carbonate oder organischen Nitrile gelöst ist.

**15.** Verwendung der LiPF$_6$-Lösungen gemäß der Ansprüche 1 bis 8 in elektrochemischen Speichervorrichtungen.

**16.** Verfahren zur Verbesserung der Langzeitstabilität oder Korrosionsstabilität elektrochemischer Speichervorrichtungen, bevorzugt der zu diesem Zweck einzusetzenden LiPF$_6$-Lösungen, **dadurch gekennzeichnet, dass** man diese Lösungen einer Neutralisation und einer Feststoffabtrennung unterzieht, wobei die Neutralisation die Zugabe wenigstens eines Additivs der Reihe aus elementarem Lithium oder wenigstens einer seiner Verbindungen Lithiumcarbonat oder Butyllithium, wobei als Lithiumverbindung auch das Reaktionsprodukt aus Lithium und wasserfreien Acetonitril gilt zu einer Lösung des LiPF$_6$ in wenigstens einem Lösungsmittel aus der Reihe der organischen Nitrile oder der organischen Carbonate bedeutet und die anschließende Feststoffabtrennung über einen Spritzenfilter erfolgt um das Additiv und/oder sonstige als Feststoff vorliegende Substanzen, bevorzugt Lithiumfluorid, zu entfernen.

Europäisches
Patentamt

European
Patent Office

Office européen
des brevets

**EUROPÄISCHER RECHERCHENBERICHT**

Nummer der Anmeldung

EP 11 19 5631

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | EP 1 976 048 A1 (CENTRAL GLASS CO LTD [JP]) 1. Oktober 2008 (2008-10-01) | 1-8,15 | INV. C01B25/455 C01D15/00 |
| A | * Beispiele 1-3 * ----- | 9-14,16 | |
| X | US 6 197 205 B1 (TSUJIOKA SHOUICHI [JP] ET AL) 6. März 2001 (2001-03-06) | 1-8,15 | |
| A | * Beispiele 6,7 * ----- | 9-14,16 | |
| X | WO 98/23536 A1 (FMC CORP [US]; SALMON DENNIS J [US]; BARNETTE D WAYNE [US]) 4. Juni 1998 (1998-06-04) | 1-8,15 | |
| A | * Beispiele 1-4 * ----- | 9-14,16 | |
| X | DATABASE WPI Week 200720 Thomson Scientific, London, GB; AN 2007-199921 XP002678432, & WO 2006/137177 A1 (MITSUBISHI CHEM CORP) 28. Dezember 2006 (2006-12-28) | 1-9, 11-15 | |
| | | | RECHERCHIERTE SACHGEBIETE (IPC) |
| A | * Zusammenfassung * ----- | 10,16 | C01B C01D |

Der vorliegende Recherchenbericht wurde für alle Patentansprüche erstellt

| Recherchenort | Abschlußdatum der Recherche | Prüfer |
|---|---|---|
| München | 25. Juni 2012 | Lecerf, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 19 5631

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-06-2012

| Im Recherchenbericht angeführtes Patentdokument | Datum der Veröffentlichung | Mitglied(er) der Patentfamilie | Datum der Veröffentlichung |
|---|---|---|---|
| EP 1976048 A1 | 01-10-2008 | CN 101310407 A<br>EP 1976048 A1<br>KR 20080069270 A<br>US 2009311610 A1<br>WO 2007066464 A1 | 19-11-2008<br>01-10-2008<br>25-07-2008<br>17-12-2009<br>14-06-2007 |
| US 6197205 B1 | 06-03-2001 | CA 2193119 A1<br>US 6197205 B1 | 15-06-1997<br>06-03-2001 |
| WO 9823536 A1 | 04-06-1998 | AU 5688798 A<br>EP 0956263 A1<br>JP 2000505042 A<br>US 6001325 A<br>US 6033808 A<br>WO 9823536 A1 | 22-06-1998<br>17-11-1999<br>25-04-2000<br>14-12-1999<br>07-03-2000<br>04-06-1998 |
| WO 2006137177 A1 | 28-12-2006 | CN 101208266 A<br>CN 101847753 A<br>CN 101847754 A<br>EP 1905739 A1<br>KR 20080018897 A<br>US 2008305402 A1<br>US 2012100435 A1<br>WO 2006137177 A1 | 25-06-2008<br>29-09-2010<br>29-09-2010<br>02-04-2008<br>28-02-2008<br>11-12-2008<br>26-04-2012<br>28-12-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 102009972 A
- JP 9268005 A
- DE 19805356 C1
- WO 0228500 A1
- WO 03080642 A1
- JP 02087473 A
- WO 0038813 A1

- JP 10338653 B
- JP 11054378 B
- JP 11008163 B
- DE 19827631
- DE 19827630
- JP 01122566 A

**In der Beschreibung aufgeführte Nicht-Patentliteratur**

- *Chem.Eur. J.,* 2002, vol. 8, 2081-2087
- **W.HUETTEL.** Untersuchungen zur stereoselektiven, oxidativen Phenolkupplung von Cumarinen in Aspergillus Niger. *Rheinische Friedrich Wilhelms Universität Bonn,* August 2005

- **F.P.DOUSEK.** *Chem. Listy,* 1973, vol. 67 (4), 427-32